(19)

**Europäisches Patentamt**
**European Patent Office**
**Office européen des brevets**

(11) **EP 1 972 926 A1**

(12) **EUROPEAN PATENT APPLICATION**

(43) Date of publication:
**24.09.2008 Bulletin 2008/39**

(51) Int Cl.:
*G01N 21/45* (2006.01)    *G01N 21/47* (2006.01)

(21) Application number: **07104529.8**

(22) Date of filing: **20.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Danmarks Tekniske Universitet 2800 Lyngby (DK)**

(72) Inventor: **Tycho, Andréas 2100, Copenhagen (DK)**

(54) **Assessment of parameters by optical measurement**

(57) The present invention relates to a method and an apparatus for assessing parameters in a material by measurement, such as optical measurement, whereby material characterization may be conducted non-invasively through accurate extraction of optical parameters.

More particularly the present invention relates to a method, a system and a device for assessing quality and/or quantity parameters in a material using coherence interferometry and/or reflectometry. The object under investigation is illuminated with light from a broadband light source and the backscattered light from the object interferes with a reference signal to produce an interference signal, from which parameters of the material can be determined. Thereby several parameters such as optical parameters and parameters relating to the physical and chemical composition of the material can be extracted.

The present invention may be used for determination provide for a variety of parameters, such as concentration, particle size, and/or chemical composition.

Fig. 1

**Description**

All patent and non-patent references cited in the application are hereby incorporated by reference in their entirety.

Field of invention

The present invention relates to a method and an apparatus for assessing parameters in a material by measurement, such as optical measurement. Thereby material characterization may be conducted non-invasively through accurate extraction of optical parameters.

Background of invention

Optical coherence tomography (OCT) has become important in non-invasive medical diagnostics. OCT works analogously to an ultrasound scanner; the major difference is that ultrasound pulses are replaced by broad-band light. The corresponding short coherence length permits a spatial resolution in depth direction of less than 10 $\mu$m.

Besides imaging, OCT may also be used to extract the optical parameters, such as refractive index (n), scattering coefficient ($\mu_s$), the so-called *g* value and absorption coefficient ($\mu_a$). The result is a measurement of the physical composition of the sample relating to both the chemical composition (n and $\mu_a$, where $\mu_a$ is the parameter commonly probed through spectroscopy) and size, shape and contents of particles (g and $\mu_a$).

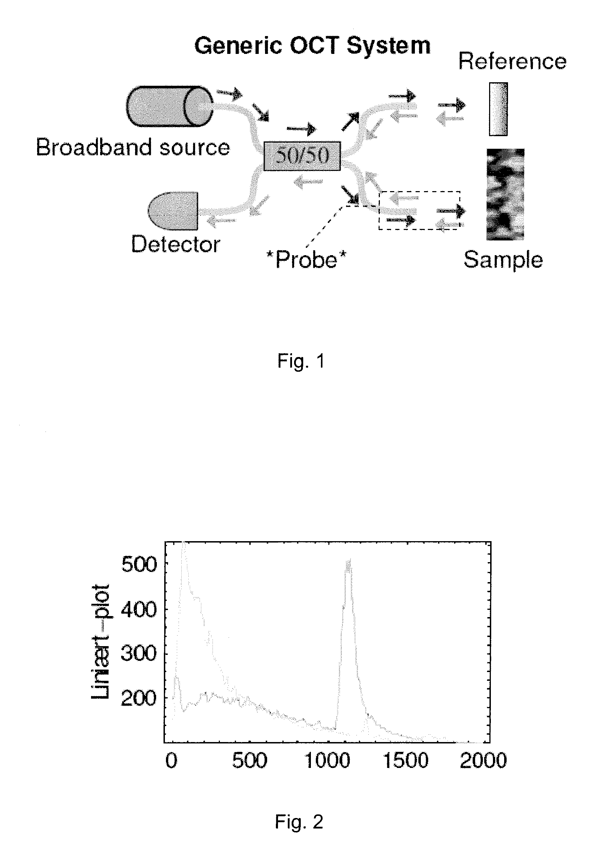

A generic OCT system is shown in a schematic form in Figure 1. There exists an extensive variety of probe designs more or less optimized towards specific applications. Different design parameters could be size, interface with the sample, methods of scanning the beam over the surface and beam management.

a) Fixed focus operation

Fixed focus operation is the simplest implementation. The beam is chosen to have a long focal length so that the spot size of the beam is relatively constant at the part where the system measures (typical the first 1-2 mm). This has the drawback that the spot size in the sample must be rather large (eg. 10-15 $\mu$m). The focal length is a measure of how much the beam diameter varies before and after the focal plane (the position where the beam diameter is minimal).

b) Dynamic focusing

In many aspects dynamic focusing results in superior images compared to fixed focus. Here a sharper focus is chosen to obtain a smaller spot size in the focal plane (2-5 $\mu$m), which in turn gives better resolution. However, this implementation results in added complexity. To obtain the advantage of dynamic focusing the position of the focal plane has to be matched to the point measured by the OCT system. In so-called time-domain OCT system this means that the distance to the reference mirror has to be matched to the distance to focal plane in the sample. Several schemes exist to obtaining this, but the main point is that the probe-head has to incorporate a method of moving the focal plane in the sample. This could for example be done by moving the focusing lens mechanically. An example of implementation of dynamic focusing is the OCT system produced by ISIS Optronics, see for example US 6,970,22.

Summary of invention

The present invention provides a novel probe configuration by use of which a variety of parameters from a sample material is obtainable.

In one aspect of the invention a method for assessing at least one quality and/or quantity parameter in a material, said method comprising

- providing an coherence interferometry and/or reflectometry system, said system comprising a wave source, a detector and a processor, wherein said sample arm has a probe, said probe comprising an optical system with a fixed lens capable of providing a focused light beam,

- emitting a beam from said wave source,

- focusing the beam into the material,

- allowing waves to be reflected from the material obtaining a reflected sample beam.

- detecting and processing said reflected beam obtaining processed beam data,

- assessing said at least one quality parameter or quantity parameter from said processed beam data.

In another aspect of the invention a coherence interferometry and/or reflectometry system for assessing at least one quality and/or quantity parameter in a homogenous material, said system comprising

- a wave source,

- an interferometer for splitting and combining beams from the wave source,
a sample arm and a reference arm, wherein the interferometer is arranged to split a beam from said wave source into two beams into the sample arm and the reference arm, respectively, and wherein said sample arm has a probe, said probe comprising an optical system with a fixed lens capable of providing a focused light beam, and

- a detector,

- a processor for processing a combined beam to provide processed combined beam data from which said at least one quality and/or quantity parameter may be assessed.

In yet another aspect of the invention a probe for use in a system, said probe comprising an optical system with a fixed lens capable of providing a focused light beam.
There are several advantages of this measurement compared to prior art technology, such as the advantages discussed below:
Relative to fixed focus:

- An internal reference point is created that reveals the position of the focal plane and thereby removes an important uncertainty from the measurement.

- Enables measurement of sample with $g \sim 1$, which is an important class of samples, such as biological tissue.

Relative to dynamic focus:

- The value of $g$ may be assessed accurately.

- The probe can be made very simple so that the system is cheaper and more robust. The probe may for example be used to measure the contents of a mixing tank.

- No need for a feedback system, which simplifies the OCT system and data collection

The present invention may be used for determination provide for a variety of quantity or quality parameters, such as concentration, particle size, and/or chemical composition. The invention may be applied for example when measuring mixtures in tanks, characterisation of plastics and polymers, as well as medical diagnostics.

Description of Drawings

Figure 1 shows a schematic form of a generic OCT system.

Figure 2 is a linear plot of a 1 D measurement, also called an A scan.

Figure 3 shows general probe designs.

Figure 4 shows an A scan obtained by using a fixed focus probe wherein the g value is 0.995 and the focal position is 0.2 mm.

Figure 5 shows an A scan obtained by using a fixed focus probe wherein the g value is 0.9975 and the focal position is 0.2 mm.

Figure 6 shows an A scan obtained by using a fixed focus probe wherein the g value is 0.9975 and the focal position is 0.3 mm.

Figure 7 shows an A scan obtained by using a dynamic focus probe wherein the g value is 0.995.

Figure 8 shows an A scan obtained by using a dynamic focus probe wherein the g value is 0.9975.

Figure 9 shows an A scan obtained by using a probe according to the invention.

Figure 10 shows a system according to the invention, wherein

    1. is Window
    2. is Lens
    3. is Collimated beam incident on focusing lens
    4. is Focused beam

And furthermore a sketch of measured reflectivity as a function of optical distance, such as that traversed by the reference mirror residing in free-space in a time-domain low-coherence reflectometer or OCT system, wherein

    6. is Peak due to the increased intensity in the focal plane
    7. is Peak due to the transition from window to sample
    8. is Peak due to the transition from air to window
    9. is the z-axis

Definitions

A scan

A 1 D measurement is also called an A-scan. In such a measurement the reflectivity is measured as a function of depth. Figure 2 is an example of such an A-scan where the reflectivity is recorded for two different samples as the function of depth in $\mu$m. In the red curve the sample exhibits a low entrance reflection and a large reflection from the backside of the sample at about 1200$\mu$m. On the other hand the sample with the blue curve shows a high entrance peak and very little reflectivity from the backside at 1250 $\mu$m.
A-scans may be obtained from measurements in a single surface position, or as an average of several measurements from different positions.

Homogeneous material

A material comprising one or more components, such as a solvent with particles, in such a way that the mean scattering parameters are substantially uniform. An examples of non-homogeneous materials are stratified materials consisting of layers of materials with different scattering parameters.

Generalized depth of focus

The distance along the axis of propagation from the depth of minimum area of the beam to where the area has doubled. For a Gaussian beam the generalized depth of focus reduced to the well-etsablished term depth of focus.

Detailed description of the invention

The present invention relates to a system and a method for extracting parameters from a material in order to provide characteristic information from said material. When a beam penetrates a material, for example tissue, a fraction given by $\mu_s$ is scattered at each depth and the rest passes straight through. A part of the scattered beam is reflected straight back and can be detected by the system according to the invention, but most is only deviated from its original course. How much deviation is described by the $g$-parameter and this relates to the particle size, shape, and its difference in refractive index from the surroundings. The measurement by interferometry and/or reflectometry is unique in that it has the potential to measure $g$ and $\mu_s$ separately. This is because a small portion of the scattered beam finds it way back into the path of the unscattered beam. Accordingly, measurement of the properties has the potential of revealing both particle size and concentration.

For most tissues the *g* value, which ranges from -1 to 1, is very close to 1. This means the light scattered from a particle will deviate very little from its initial course. As *g* approaches 1 it is increasingly difficult to distinguish the situation where the scattering concentration is high, but each scattering means very little, from the situation where the scattering concentration is lower but with a higher effect. This is illustrated in the comparative examples 1 and 2.

Thus, in one aspect the present invention relates to a method for assessing at least one quality and/or quantity parameter in a material, said method comprising

- providing a coherence interferometry and/or reflectometry system, said system comprising a wave source, a detector and a processor, wherein said sample arm has a probe, said probe comprising an optical system with a fixed lens capable of providing a focused beam,

- emitting a beam from said wave source,

- focusing the beam into the material,

- allowing waves to be reflected from the material obtaining a reflected sample beam.

- detecting and processing said reflected beam obtaining processed beam data,

- assessing said at least one quality parameter or quantity parameter from said processed beam data.

The present invention avoids active parts in that the probe is a fixed but highly focusing lens. This setup is unsuitable for imaging, but has been found to be very suitable for measuring the parameters used in the present invention.

The term wave source refers to a source providing the relevant waves, such as a light source, an acoustic source, an ultra-sound source, a radar, etc.

A light source may be selected from one of the two main categories:

- Broadband light sources are applied in time-domains system where the reference path length is scanned and in spectral systems where the detector is a spectrometer (Fourier domain).
- Tuneable lasers are applied in frequency modulated systems i.e. a fourier-domain system where the wavelength of the light source is scanned.

System

Any optical coherence interferometry and/or reflectometry system suitable for the method may be used, the requirement is that the system should be able to resolve reflectivity as a function of distance. Examples of systems are an optical low-coherence interferometer reflectometry (OLCR) system, a white-light interferometry system, an optical time-domain reflectometry (OTDR) system, an optical coherence tomography (OCT) system, a Lidar system, a radar system, a low time-coherence interferometer (LCI) and an ultrasound system.

In the following the systems are described in more details:

a. Optical time-domain reflectometry (OTDR) or Lidar. Here a light pulse is sent out and the return time is measured. OTDR is often used to find defects in kilometres of optical fibres, whereas Lidar is used to detect turbulence in air in front of aircrafts.
Compared to OLCR these systems have less resolution but longer measurement lengths and they could therefore be useful if scattering properties are to be measured over a longer distance, e.g. for monitoring of smog.

b. Radar. The wavelength is no longer in the in the optical regime and electromagnetic waves responds very differently to materials in this domain, so the choice of a suitable frequency may be possible depending on the application.

c. Ultra-sound. Probing the acoustic parameters instead as these may hold interesting information.

In a preferred embodiment the system is an OCT system comprising further an interferometer, a sample arm and a reference arm, wherein the interferometer is arranged to split a light beam from said light source into two light beams into the sample arm and the reference arm, respectively, whereby the method comprises

- emitting a light beam from said light source,

- splitting said light beam into a sample light beam in the sample arm, and a reference light beam in the reference arm,

- focusing light into the material,

- allowing light to be reflected from the material obtaining a reflected sample light beam.

- combining said reflected sample light beam and the reference light beam obtaining a combined reflected light beam,

- detecting and processing said reflected light beam obtaining processed light beam data,

- assessing said at least one quality parameter or quantity parameter from said processed light beam data.

The OCT system may be a time domain OCT system wherein the path length of the reference arm is translated longitudinally in time, or a frequency domain OCT system selected from spectral-OCT and wavelength swept-OCT. In frequency domain OCT the broadband interference is acquired with spectrally separated detectors. Due to the Fourier relation the depth scan can be immediately calculated by a Fourier-transform from the acquired spectra without movement of the reference arm.

Any suitable light source may be used in the system. There are two main categories:

- Broadband light sources are applied in time-domains system where the reference path length is scanned and in spectral systems where the detector is a spectrometer (Fourier domain).
- Tuneable lasers are applied in frequency modulated systems i.e. a fourier-domain system where the wavelength of the light source is scanned.

In particular the light source may be selected from the group of superluminiscent light diodes (SLD), other sources based on amplified spontaneous emission (ASE) preferably fibre-based, femtosecond lasers such as Kerr Lens based, e.g. Ti : sapphire laser or Cr : forsterite, LED, Super-fluorescence such as Yb-doped fibre, Erdoped fibre or,Tm-doped, Photonic crystal fibre preferably pumped by high intensity lasers such femtosecond, picosecond and CW, and thermal sources such as tungsten or halogen based.

The interferometer for splitting the light beam is typically a Michelson's interferometer. For most applications it is preferred that the combination of light beams is conducted in the interferometer.

The reference arm may be constructed in several suitable ways, it is however preferred that the reference arm comprises reflection means.

Probe

The advantages of the present invention are provided by the configuration of the probe. The probe comprises an optical system with a fixed lens capable of providing a highly focused light beam which is contrary to the conventional fixed focus probe wherein the depth of focus is long. By the probe according to the invention a highly focused light beam means that the depth of focus is less than the penetration depth which is sub-optimal for imaging.

By the term "highly focused" is meant the following:

The generalized depth of focus, understood as the distance from the minimum area of the beam to where the area has doubled, is less than the penetration depth, preferably less than 50% of the penetration depth, more preferably less than 25% of the penetration depth, less than 10% of the penetration depth, less than 5% of the penetration depth, less than 1 % of the penetration depth, less than 0.1 % of the penetration depth, or most preferably less than 0.01 % of the penetration depth.

Alternatively, consider a beam emitted by the probe and focused inside the sample to be probed:

The parameter r defined as

$$\Gamma = \frac{w}{n \cdot f \cdot \lambda \cdot z_f \cdot \mu_s}$$

wherein $W$ is the characteristic transverse dimension of the beam in a plane perpendicular to the optical axis, such as the radius for a circular symmetric beam, f, would be the distance from said plane to the plane of focus, i.e. position of the minimum of said characteristic transverse dimension, if the were beam propagating entirely in free-space, n is the refractive index of the sample, $Z_f$ is the depth of the plane of focus inside the sample, and $\lambda$ is the wavelength. In a preferred embodiment of the invention the said beam emitted by the probe and focused inside the sample has a $\Gamma$ larger than 50, preferably larger than 100, most preferably larger than 200.

From the expression of r the following observation may be made. Firstly, the deeper within the sample and/or the higher the scattering coefficient the more tight (i.e. the larger $w/f$) must be. This corresponds to a physical understanding wherein the more the beam is affected by scattering prior to the plane of focus, the tighter said beam must be focused in order to achieve well defined focal peak. However, it is most likely not preferable to have a $z_f=0$ as this provide problems such ensuring the beam is focused inside the medium which is important in order to obtain all the advantages of the invention.

A second alternative is considering beam described above, then is should be so that $w/f>0.25$, $w/f>0.1$, and $w/f>0.05$.

The method according to any of the preceding claims, wherein the focus depth is in the range of more than 0.01 mm, such as more than 0.05 mm, such as preferably more than 0.1 mm, such as more than 0.15 mm, such as more than 0.2mm, such as more than 0.5 mm, such as more than 1 mm.

In relation to some applications it may be desired to have two measurements, such as two measurements simultaneously. In one embodiment this may be achieved by splitting the probe light up into two arms each with either different focusing lenses and/or different distance to the sample. The measurement from these two arms may be separated by multiplexing and/or the two arms may have different lengths, so that there is no overlap for each position of the reference arm.

The probe may be designed in any suitable manner fulfilling the requirements for focusing and fixability. In one embodiment the probe is fibre based, in another free-space in incorporated into the probe in order to connect the optical path of the probe. Furthermore, a combination of fibres and free-space may also be envisaged.

Parameters

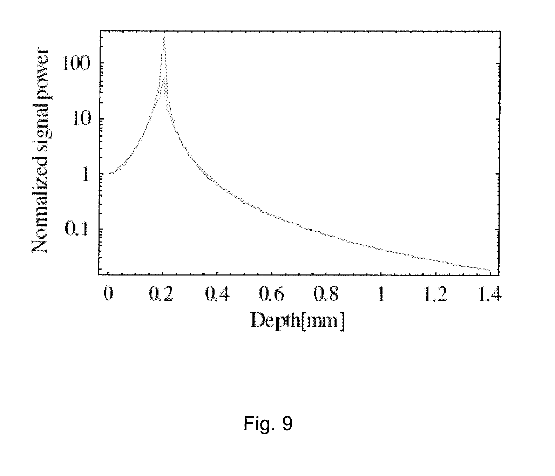

The present invention offers the possibility of extracting a variety of parameters from the measurements by providing a probe having a sufficiently high focus. In particular the following parameters may be extracted, see also the presentation in Figure 9:

1. The scattering coefficient from the height of the peak.

2. The *g*-value as the remaining curve depends on as $\mu_s$ (1-*g*), and as $\mu_s$ is known from measurement 1.

3. The refractive index from the position of the peak. Depending on the application this requires accurate knowledge of the distance from the lens to the sample. If the probe is immersed into e.g. a tank of milk this measurement is straight forward. For other measurements the distance may either be calibrated or measured simultaneously using e.g. a laser ranging device.

4. Absorption which may be extracted from the EHF theory. For most tissues the absorption is very low compared to scattering, however for other sample materials the absorption may be higher.

From these parameters the sample material may be characterised with respect to one or more quality and/or quantity parameters.

In particular the one or more quality and/or quantity parameter(s) may be selected from

- Number of particles ($\mu_s$)
- Size of particles (g)
- Chemical composition ($\mu_a$ and n)

Thus, in one embodiment the at least one quality and/or quantity parameter is the size of particles in the material. The method according to the invention also allows for determination of the size of at least two different particles, such as the size of at least three different particles.

In another embodiment the at least one quality and/or quantity parameter is the concentration of particles in the sample material.

In yet another embodiment the at least one quality and/or quantity parameter is the chemical composition.

According to the invention it is also possible to determine a combination of the above parameters, such as both the size and the concentration of particles.

Calculations of one or more parameters

The models applied in the following are examples of possible methods of calculations. The choice and application of the wide variety of possible theoretical and computational models will be apparent to a person skilled in the art and does in no way effect the general concept of the application. For example a method for calculating the scattering properties of particles, such as FTDT methods and more advanced methods, may also be applied to model beam propagation in such as full field simulation via finite element methods.

In the following a configuration is chosen wherein the optical system resides outside the sample container probing the sample through a window. The configuration therefore consists of a collimated beam impinging on a lens with focal length, *f*, focusing the beam through a window inside the sample. However, by simple modifications similar configurations may be described such as configurations with no or several windows or where the lens is brought into contact with the medium or is even immersed. It is also clear that any suitable method of focusing the optical beam may be applied. The following refractive indexes are applied:

- $n_w$ is the refractive index of the window
- $n_{air}$ is the refractive index of the medium between the lens and the window. For most physical implementations $n_{air}=1$
- $n$ is refractive index of the sample

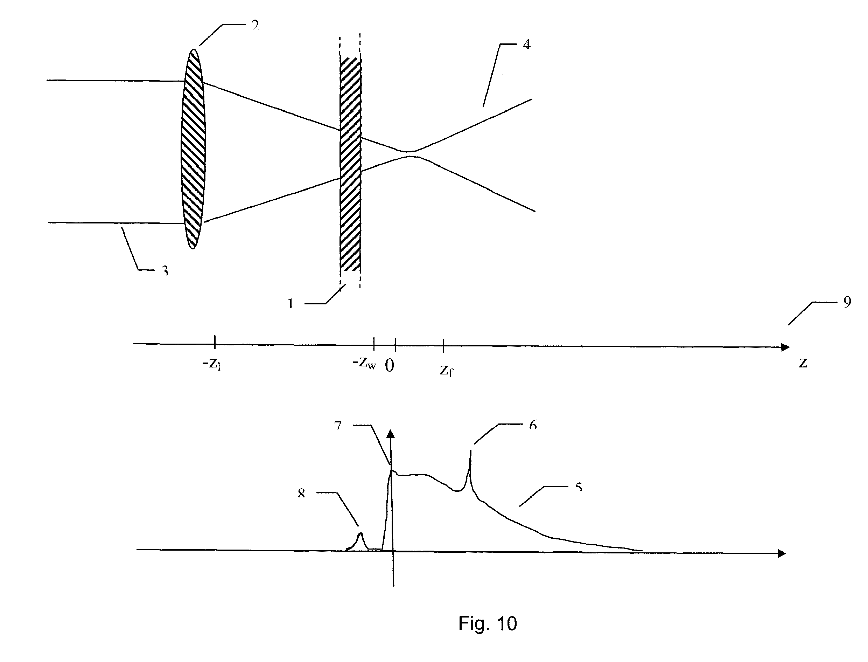

Figure 10 shows schematically a system according to the invention as well as a graphic representation of the results obtained.

The coordinate z describes the longitudinal axis and is set to zero at the surface of the sample. The value of $z=-z_l$ designates the position of the lens whereas $z=-z_w$ is the front surface of the window.

Following standard methods within optics, the ABCD matrix for the transfer from the lens to the focal plane within the sample is found as.

$$\begin{bmatrix} A & B \\ C & D \end{bmatrix} = \begin{bmatrix} 1 & z_f \\ 0 & 1 \end{bmatrix}\begin{bmatrix} 1 & 0 \\ 0 & n_w/n \end{bmatrix}\begin{bmatrix} 1 & z_w \\ 0 & 1 \end{bmatrix}\begin{bmatrix} 1 & 0 \\ 0 & n_{air}/n_w \end{bmatrix}\begin{bmatrix} 1 & z_l - z_w \\ 0 & 1 \end{bmatrix} \tag{1}$$

$$\begin{bmatrix} A & B \\ C & D \end{bmatrix} = \begin{bmatrix} 1 & z_l - z_w + z_w \cdot n_{air}/n_w + z_f \cdot n_{air}/n \\ 0 & n_{air}/n \end{bmatrix} \tag{2}$$

In the focal plane *B=f* so that:

$$f = z_l - z_w + z_w \cdot n_{air}/n_w + z_f \cdot n_{air}/n \tag{3}$$

The optical path length corresponding to the distance between any known reflectors is by:

$$z_o = \sum z_q \cdot n_q \tag{4}$$

This distanced is matched by the distanced traversed by the reference mirror (in a time-domain system) or in other words the optical distance measured by the OCT system. Assuming that the reflection from the window front surface is easily identifiable the optical distance from the front surface to the focal plane identified by the distinct peak is given by:

$$z_o = z_w \cdot n_w + n \cdot z_f \tag{5}$$

Depending on the application other reflections may be used or one may employ a device to measure the distance between the lens and sample such as e.g. a laser interferometer.

Inspecting equations (1) and (5) the only two unknowns are $z_f$ and n, which are then straight forward to solve for, so that:

$$z_f = \sqrt{\frac{\left(f - (z_l - z_w) - z_w \cdot n_{air}/n_w\right)(z_o - z_w \cdot n_w)}{n_{air}}}$$

$$n = \sqrt{n_{air} \frac{z_o - z_w \cdot n_w}{f - (z_l - z_w) - z_w \cdot n_{air}/n_w}}$$

(6)

The next step of this example is to relate the curve to the optical parameter of scattering and/or absorption and scattering anisotropy. Having established $z_f$ it is now possible to apply the knowledge that the reduction of the peak measured from the focal plane is related to $\mu_s z_f$. In comparison with the theoretical prediction of the signal power as a function of z, which ordinarily begins at $z$=0 and is normalized to 1 at this point, one difficulty is that the peak due to the transition from window material to the sample interferes with the measurement for $z$~0. Accordingly, the level of the entire curve is sometimes not straight forward to determine. Several methods are available to extract the required information from the curve:

1. Fitting to the remainder of the curve: A fitting routine is used to fit the curve to a suitable model of the reflectometer signal. The level of the curve may be maintained as a fitting parameter and the data points affected by the signal due to the transition from the window material to the sample may be omitted. One example of model is the model based on the extended Huygens-Fresnel principle proposed by Thrane et al (Lars Thrane, Harold T. Yura, Peter E. Andersen, "Analysis of optical coherence tomography systems based on the extended Huygens-Fresnel principle", JOSA A, Vol. 17, Issue 3, pp. 484-490 (March 2000)) in either its approximate closed-form or its more exact form involving numerical integration. The choice of phase-function for the particles scattering pattern should also be applied according to the expected sample and it is also sometimes necessary to weigh computational convenience versus requirements of accuracy. It should be noted that this model assumes negligible absorption but that the absorption may be incorporated using the same formalism. If the absorption is non-negligible it may be possible to extract the absorption along with scattering and anisotropy. Well-established methods of non-invasive measurement of the absorption exist in the art, such as the methods based on distributed reflectivity.

Preferably, this method is combined with the OCT-probe so that the light used for measuring reflectivity as a function of depth is simultaneously utilized to perform a distributed reflectivity measurement through which absorption may be established. In some cases the contribution to absorption from the scatterers is negligible and it therefore dominated by the background medium. As this is often a well-known substance, such as saline, it may be sufficient to use the data from the background medium in the model instead of omitted the effect to obtain a better accuracy.

2. Subtracting the signal due to the transition: As the refractive index of the sample has been established, the reflectivity of the transition from window material to sample may be calculated. Depending on the accuracy required one may apply simple calculations based on Fresnel coefficients or increase accuracy by incorporating that the angle of incidence varies across the beam profile. The highest possible accuracy is obtained by measuring the beam profile on- or off-line and use numeric methods to calculate the reflectivity. Furthermore, knowing the point-spread-function (PSF) of the system i.e. the shape of the signal from a mirror, the signal from the transition may be calculated and subtracted from the signal curve. If difficulties from a drifting PSF arise, the PSF is easily measured either using a reference reflector on- or off-line in the system or by utilizing known reflection in the system, such as the reflection due to the transition from air to window, as a reference reflection.

With the level of the curve established, i.e. the correct value for $z$=0, the reduction of the peak due to scattering and/or absorption is now measurable compared to the theoretical (or measured) value in the absence of scattering and/or absorption. As discussed previously, this reduction establishes the value for the scattering plus the absorption. The anisotropy may then be determined from the fact that the tail of the curve mainly is determined by $\mu_s(1\text{-}g)$ in the absence of absorption. The anisotropy is found be fitting a suitable model to the tail of the curve where due consideration is paid to the noise of the measurement system and with the same considerations with regard to absorption as in method 1.

Having established the scattering coefficient, $\mu_s$, and anisotropy, $g$, the next step is to relate these values to the concentration and size of the scattering particles. However, for many applications these coefficients are in themselves indicative of the state of the sample and it is therefore sufficient obtain these values. Even if only the scattering coefficient is required, the method according to the present invention is more robust for $g\sim1$, which is often the case for tissue and tissue-like materials.

Calculation of concentration and particle size

In one embodiment the scattering coefficient may be related to the concentration of the scatterers as:

$$\mu_s = N \cdot C \quad \text{for low volume fractions} \tag{7}$$

and

$$\mu_s = \frac{\phi(1-\phi)}{V}C \quad \text{for volume fraction of the scatteres above } \sim20\%. \tag{8}$$

Here $\phi$ is the volume fraction of the scatterers, $V$ is the volume of a single scatterer, $N$ and is the number of particles within a unit volume and $C$ is the total scattering cross section of a particle. Similarly it is known the anisotropy factor is given by:

$$g = \int_0^\pi p(\theta) \cos\theta \sin\theta d\theta \,, \tag{9}$$

where $p(\theta)$ is the normalized phase function describing the probability of a scattered photon exiting at angle $\theta$ relative to the incident direction, and the scattering cross-section is given by:

$$C = \int_0^\pi P(\theta) \sin\theta d\theta \,,$$

where $P(\theta)$ is the unnormalized phase function, which in turn is the average of the scattering pattern $F_s(\varphi,\theta)$ over the azimuthal angle $\varphi$.
The phase function and scattering pattern are related to the shape of the particle, i.e. also its volume, and the refractive index of the particle. Accordingly, $g$ is related to the particle shape and size so to e.g. estimate size knowledge of the refractive index and shape of the particles is needed. If the possible particle types are known values for $g$ may be established from reference measurements. Other methods are available to a person skilled in art such as:

1. Assuming spherical shaped scatterers
If the refractive index of the particles and the background are known, Mie theory may be used to calculate $g$ and C for a given particle size. The reverse calculation may be performed from look-up tables or the like. Ambiguity may be solved by assuming that the refractive index measured by Eq. (6) is related to the composition by:

$$n = \sum_i^{\substack{\text{number} \\ \text{of constituents}}} \varphi_i n_i \tag{10}$$

Accordingly if the sample consist of a background with one type of scatterer, the volume fraction of the particles will be directly relatable to the refractive index.

2. Non-spherical shaped scatterers

In this case suitable data may be obtained from numerical and analytical calculations, numerical modelling and/or from reference measurements either with the present invention or by applying other techniques known in the art such as integrating spheres or Adding-doubling measurements. In this way, suitable reference data or look-up tables may be created allowing for a relation between size and *g*-value. Again one may apply Eq. (10) to increase accuracy.

Multiple wave-lengths

In order to increase accuracy, in particular for increasing accuracy for mixed composition samples it may be preferred to employ measurement using more than one wave-lengths in the method and system according to the invention. Thereby spectroscopic information, i.e. the parameters as a function of wavelength, is obtained.

In the above calculations only a single type of scatterer is assumed present in the sample, or at least that it can be assumed that only a single species is non-negligible at the wave length used. In a real-life application a size distribution will most often be present within each species of scatterer and multiple species of scatterers may be present. In the event that an average number is not sufficient for a specific application multiple wavelengths may be applied in order to achieve $n(\lambda)$, $\mu(\lambda)$ and $g(\lambda)$ or data points along these curves. The optical properties of a scatterers varies with wave length, and accordingly, it is preferred to measure mostly small particles at short wave lengths and larger particles and structures at longer wave lengths.

In a more advanced embodiment, multivariate analysis may be applied to derive the contents of the sample. Several methods exist in the field of multivariate analysis which is often applied in spectral analysis, e.g. in IR-spectroscopy. One method is to find the wave length dependency of the optical properties for each type of scatterer, e.g. by reference experiments, and then find the composition of scatters from the multivariate analysis. Another approach is to apply neural network methods where the analysis software is taught how to recognise compositions from dataset taken from known reference samples.

The wave length dependency may be measured using several broadband light sources centred at different wavelengths. The spectra of these may be chosen to be overlapping or non-overlapping. The optical parameters will then be measured as an average value over the bandwidth of each light source. Another method is to apply one very broadband light source and then apply different sections of the spectrum and/or use spectral analysis to calculate the wavelength dependency of the optical properties. In a preferred embodiment, a Gaussian shaped band-pass filter is scanned over the practically uniform broadband light sources.

In another embodiment, if a uniform spectrum is difficult to implement, one may instead use compensation to subtract effects due to the spectral shape of the light source.

Material

The sample material may be any material wherein determination of one or more quality and/or quantity parameter (s) is desirable. It is preferred that the material is not layered, and it is more preferred that the material is homogenous or approximated to a homogenous material.

The material may be a liquid material, such as a liquid material selected from the group of milk, waste water, blood, dairy products, chemical mixtures, mixtures for production of medicine, beer, wine, molten mixtures, such as silica for production of silica-wafers.

In another embodiment the material is a solid material or semi-solid material, such as a polymer, human and animal tissue, such as skin, gastro-intestinal, larynx, gums, blatter, brain, retinal, coronary wall, as well as lesions and tumors in these areas.

In yet another embodiment the material is a gas, such as a smoke gas, pollutens, combustion gasses and bi-products.

Combination with distributed reflectivity measurement

The method of the present invention may be combined with other types of measurement in order to increase accuracy. For example an additional method applied in the art called *a distributed reflectivity measurement* (DFM) may be combined with the proposed invention to measure the absorption. As described above the model based on EHF may by designed to include absorption, however, there may be too many degrees of freedom to make an accurate fit. If so DFM may allow for the extraction of the absorption, by measuring $\mu_a$, and $\mu_s$ (1-*g*) in a different way than discussed herein above, but still using the probe beam from the system. A DFM measurement is typically performed by measuring the beam reflected from the sample into collection fibers (usually multimode) located at a distance from the probe fiber.

The signal received in the collection fibers are analysed using established theoretical models based on diffusion theory.

Two measurements with different settings

In another embodiment it is possible to increase accuracy by performing more than one measurement, such as at least two measurements, such as at least three measurements, and for each measurement changing at least one setting.

For example change of setting could be done by splitting the probe beam up into two arms each with either different focusing lenses and/or different distance to the sample. The measurement from these two arms may be separated by multiplexing or by the two arms having different lengths, so that there are no overlaps for each position of the reference arm.

Know reflector

In some cases it may be advantageous to have a reflector with known reflectivity and distance inside the sample (this is easy in a liquid). This reflection may be a mirror with a specular reflection, a transparent layer, and/or a reflector with a diffusely reflecting surface. The latter is often preferred as this provides a reflection which is substantially not influences by exact alignment and drift or changes in polarisation such as those induced by twisten the fibre going from the interferometer and the probe in a fiber-based system.

Motion for averaging

In a further embodiment a vibrating device may be attached to the probe head to introduce a slight motion relative to the sample. The aim is to obtain a spatial averaging which is assumed in the EHF theory.

Examples

Comparative example 1

A-scan obtained using fixed focus

In this section we use a setup with fixed focus where the focal length of the lens is 16mm, the center wavelength of the light source is 1310nm, the initial beam radius (1/e for the intensity) is 0.4mm, and the beam waist (focus) lies 0.2mm inside the sample. This gives a depth of focus of 1.6mm and a minimal spot diameter of 33 $\mu$m. This is a good compromise between obtaining a small spot and a long depth of focus.

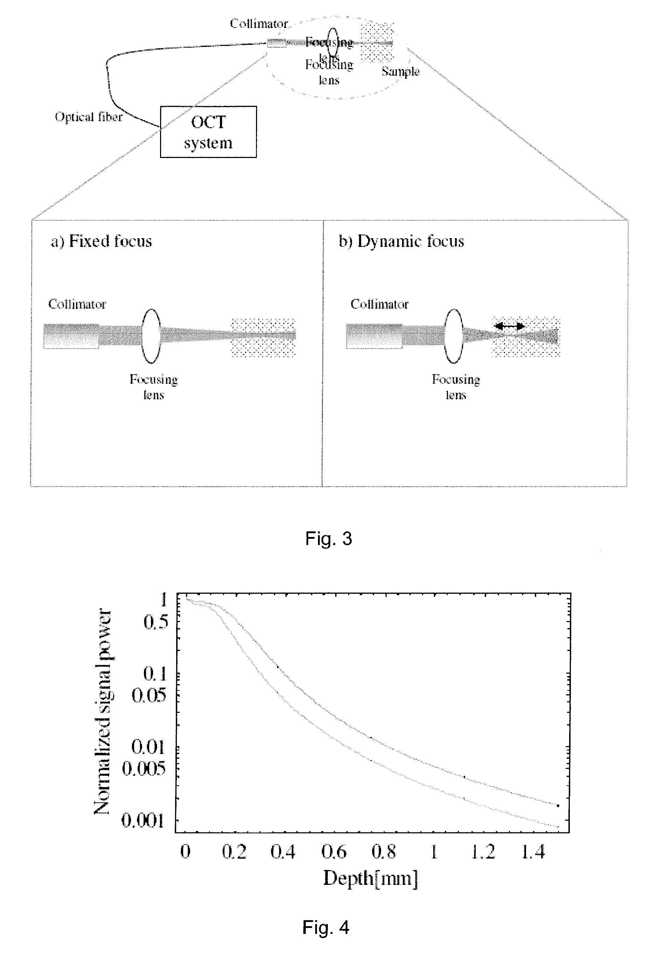

Two cases where $\mu_s$ =5 (black curves) and where $\mu_s$ =10 (red curves) is shown in Figure 4. These two cases reflects significantly different tissues as illustrated by the following curve where g=0.995 for both cases.

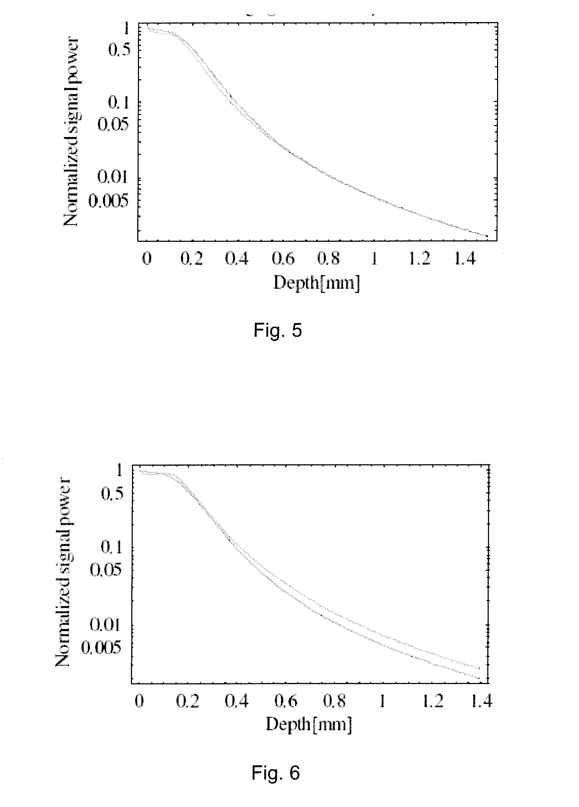

It is known that changes in $g$ and $\mu_s$ share a similarity as long as $\mu_s$ (1-$g$) is kept constant, so we then change g=0.9975 for $\mu_s$ =10, see Figure 5. Here the two curves are practically identical, which illustrates that it is difficult to distinguish between effects from changes in $g$ and $\mu_s$.

A change in focal position from 0.2 to 0.3 mm in the sample for the red curve results in the following curve in Figure 6.

Even though the difference may seem minor for this case the resulting fit with the model will return significantly incorrect results if the focus position is not known accurately.

A-scan obtained using dynamic focus

Here we assume that the best and most advanced type of dynamic focusing is used where a feed-back system is used to ensure that the beam is always focus at the same depth where the OCT system is measuring. The set of beam parameters has been chosen so that the focal length of the lens is 2mm and the initial beam radius is 0.5mm. This results in a spot size of about 3$\mu$m.

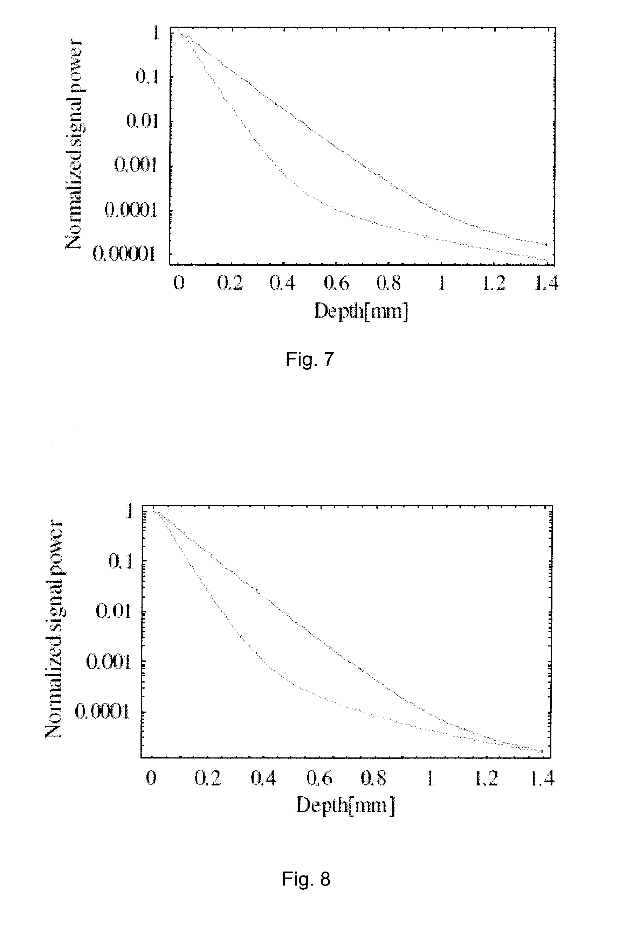

Drawing the same curves as above, for constant g=0.995 and $\mu_s$ =5 and 10, Respectively, is shown in Figure 7.

If g=0.9975 for $\mu_s$ =5 we then get Figure 8.

In contrast to the fixed focus case we here have a significant difference that may be identified experimentally. However, the introduced difference for $\mu_s$ =5 can only be seen deep into the sample and thus is likely to be affected by noise. Accordingly, advanced dynamic focus systems are suitable for obtained accurate measurements of the scattering coefficient $\mu_s$, but not necessarily of $g$. Furthermore, as mentioned above this setup requires an active probe where the focus position can be scanned as well as the added complexity of the feed-back loop.

**Claims**

1. A method for assessing at least one quality and/or quantity parameter in a material, said method comprising

   - providing an coherence interferometry and/or reflectometry system, said system comprising a wave source, a detector and a processor, wherein said sample arm has a probe, said probe comprising an optical system with a fixed lens capable of providing a focused light beam,
   - emitting a beam from said wave source,
   - focusing the beam into the material,
   - allowing waves to be reflected from the material obtaining a reflected sample beam.
   - detecting and processing said reflected beam obtaining processed beam data,
   - assessing said at least one quality parameter or quantity parameter from said processed beam data.

2. The method according to claim 1, wherein the system is selected from optical low-coherence interferometer reflectometry (OLCR), white-light interferometry, optical time-domain reflectometry (OTDR), optical coherence tomography (OCT), Lidar, radar, and ultrasound.

3. The method according to any of the preceding claims, wherein the OCT system is a time domain OCT system.

4. The method according to any of the preceding claims, wherein the OCT system is a frequency domain OCT system selected from spectral-OCT and wavelength swept-OCT.

5. The method according to any of the preceding claims, wherein the system further comprises an interferometer, a sample arm and a reference arm, wherein the interferometer is arranged to split a beam from said wave source into two beams into the sample arm and the reference arm, respectively, said method further comprising

   - emitting a beam from said wave source,
   - splitting said beam into a sample beam in the sample arm, and a reference beam in the reference arm,
   - focusing the beam into the homogenous material,
   - allowing waves to be reflected from the material obtaining a reflected sample beam,
   - combining said reflected sample beam and the reference beam obtaining a combined reflected beam,
   - detecting and processing said reflected beam obtaining processed beam data,
   - assessing said at least one quality parameter or quantity parameter from said processed beam data.

6. The method according to any of the preceding claims, wherein the material is a homogenous material.

7. The method according to any of the preceding claims, wherein the at least one quality and/or quantity parameter is size of particles in the material.

8. The method according to any of the preceding claims, wherein the at least one quality and/or quantity parameter is concentration of particles in the homogenous material.

9. The method according to claim 7, wherein the size of at least two different particles is determined.

10. The method according to any of the preceding claims, wherein the material is a liquid material, such as a liquid material selected from the group of milk, waste water, blood, dairy products, chemical mixtures, mixtures for production of medicine, beer, wine, molten mixtures, such as silica for production of silica-wafers

11. The method according to any of the preceding claims, wherein the material is a solid material or semi-solid material, such as a polymer, human and animal tissue, such as skin, gastro-intestinal, larynx, gums, blatter, brain, retinal, coronary wall, as well as lesions and tumors in these areas.

12. The method according to any of the preceding claims, wherein the material is a gas, such as a smoke gas, pollutens, combustion gasses and bi-products.

13. The method according to any of the preceding claims, wherein the light source is selected from the group of superluminiscent light diodes and femtosecond lasers.

**14.** The method according to any of the preceding claims, wherein the interferometer is a Michelson's interferometer.

**15.** The method according to any of the preceding claims, wherein the reference arm comprises reflection means.

**16.** The method according to any of the preceding claims, wherein the combination of beams is conducted in the interferometer.

**17.** The method according to any of the preceding claims, wherein said processed combined light beam data is a plot of an A-scan, preferably the entire A-scan.

**18.** The method according to claim 17, wherein said processed combined light beam data includes a reference to the position of a peak on the A-scan plot.

**19.** The method according to claims 17, wherein said processed combined light beam data includes a reference to the height of a peak on the A-scan plot.

**20.** The method according to any of the preceding claims, wherein the method includes a measurement of the distance between the probe and the sample.

**21.** The method according to any of the preceding claims, wherein the method includes a calibration with respect to the distance between the probe and the sample.

**22.** A coherence interferometry and/or reflectometry system for assessing at least one quality and/or quantity parameter in a homogenous material, said system comprising

- a wave source,
- an interferometer for splitting and combining beams from the wave source,
a sample arm and a reference arm, wherein the interferometer is arranged to split a beam from said wave source into two beams into the sample arm and the reference arm, respectively, and wherein said sample arm has a probe, said probe comprising an optical system with a fixed lens capable of providing a focused light beam, and
- a detector,
- a processor for processing a combined beam to provide processed combined beam data from which said at least one quality and/or quantity parameter may be assessed.

**23.** The system according to claim 22, having one or more means for performing the features as defined in any of the claims 2-21.

**24.** A probe for use in a system as defined in claim 23, said probe comprising an optical system with a fixed lens capable of providing a focused light beam.

**Generic OCT System**

Fig. 1

Fig. 2

Fig. 3

Fig. 4

Fig. 5

Fig. 6

Fig. 7

Fig. 8

Fig. 9

Fig. 10

EP 1 972 926 A1

EP 1 972 926 A1

## EUROPEAN SEARCH REPORT

European Patent
Office

Application Number

EP 07 10 4529

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FABER D J ET AL: "Quantitative measurement of attenuation coefficients of weakly scattering media using optical coherence tomography" OPTICS EXPRESS OPT. SOC. AMERICA USA, vol. 12, no. 19, 20 September 2004 (2004-09-20), XP002446372 ISSN: 1094-4087 * abstract * * page 4356, last paragraph - page 4357 * * page 4359, last paragraph * * page 4362 * * figures 5,7 * | 1-24 | INV. G01N21/45 G01N21/47 |
| X | KNUTTEL A ET AL: "New method for evaluation of in vivo scattering and refractive index properties obtained with optical coherence tomography" JOURNAL OF BIOMEDICAL OPTICS SPIE USA, vol. 9, no. 2, March 2004 (2004-03), pages 265-273, XP002446373 ISSN: 1083-3668 * page 266, left-hand column * * page 267, right-hand column * * figure 1 * | 1-6, 10-24 | **TECHNICAL FIELDS SEARCHED (IPC)** G01N G01B A61B |
| X | US 6 256 102 B1 (DOGARIU ARISTIDE [US]) 3 July 2001 (2001-07-03) * figure 3 * * column 4, line 9 - line 30 * * column 5, line 20 - line 41 * * column 6, line 30 - line 36 * | 1-16, 22-24 | |

-/--

The present search report has been drawn up for all claims

| Place of search | Date of completion of the search | Examiner |
|---|---|---|
| The Hague | 2 October 2007 | D'Alessandro, Davide |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

        ..............................................................................
& : member of the same patent family, corresponding
      document

EPO FORM 1503 03.82 (P04C01)

**EP 1 972 926 A1**

<table>
<tr><td colspan="2"><strong>European Patent Office</strong></td><td><strong>EUROPEAN SEARCH REPORT</strong></td><td><strong>Application Number</strong><br>EP 07 10 4529</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ESENALIEV R O ET AL: "Accurate measurement of total attenuation coefficient of thin tissue with optical coherence tomography"<br>IEEE JOURNAL OF SELECTED TOPICS IN QUANTUM ELECTRONICS, IEEE SERVICE CENTER, PISCATAWAY, NJ, US,<br>vol. 9, no. 2, March 2003 (2003-03), pages 210-221, XP011102887<br>ISSN: 1077-260X<br>* page 210, right-hand column *<br>* page 211, right-hand column *<br>* page 216, left-hand column, paragraph 3 - right-hand column *<br>* figures 1,8 * | 1-24 | |
| X | IZATT J A ET AL: "OPTICAL COHERENCE MICROSCOPY IN SCATTERING MEDIA"<br>OPTICS LETTERS, OSA, OPTICAL SOCIETY OF AMERICA, WASHINGTON, DC, US,<br>vol. 19, no. 8,<br>15 April 1994 (1994-04-15), pages 590-592, XP000440040<br>ISSN: 0146-9592<br>* page 590 - page 591, right-hand column, paragraph 1 *<br>* figures 1,3,4 * | 1-6, 10-24 | |
| A | RANDALL S L ET AL: "Optical low-coherence reflectometry for nondestructive process measurements"<br>AIP CONFERENCE PROCEEDINGS AIP USA, no. 657B, 2003, pages 1713-1720, XP002446374<br>ISSN: 0094-243X<br>* page 1713 - page 1714 *<br>* page 1718 - page 1720 * | 1-24 | TECHNICAL FIELDS SEARCHED (IPC) |

The present search report has been drawn up for all claims

| Place of search | Date of completion of the search | Examiner |
|---|---|---|
| The Hague | 2 October 2007 | D'Alessandro, Davide |

EPO FORM 1503 03.82 (P04C01)

## ANNEX TO THE EUROPEAN SEARCH REPORT
## ON EUROPEAN PATENT APPLICATION NO.

EP 07 10 4529

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2007

| Patent document cited in search report | Publication date | Patent family member(s) | Publication date |
|---|---|---|---|
| US 6256102 B1 | 03-07-2001 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 697022 A

**Non-patent literature cited in the description**

• **LARS THRANE ; HAROLD T. YURA ; PETER E. ANDERSEN.** Analysis of optical coherence tomography systems based on the extended Huygens-Fresnel principle. *JOSA A,* March 2000, vol. 17 (3), 484-490